# EUROPÄISCHE PATENTANMELDUNG

(11) **EP 0 825 698 A2**
(43) Veröffentlichungstag der Anmeldung: **25.02.1998**
(21) Anmeldenummer: 97114106.4
(22) Anmeldetag: 15.08.1997
(51) Int. Cl.: H02H 7/085

(54) **Verfahren zur Überwachung und Steuerung des Öffnungs- und Schliessvorgangs von elektrisch betriebenen Aggregaten**

(30) Priorität: 20.08.1996 DE 19633415
(71) Anmelder: Leopold Kostal GmbH & Co. KG, 58507 Lüdenscheid (DE)
(72) Erfinder: Bergmann, Eduard, 58515 Lüdenscheid (DE); Pretzlaff, Volker, 58638 Iserlohn (DE); Hörst, Norbert, 44227 Dortmund (DE)

(57) **Zusammenfassung**

Es wird ein Verfahren zur Überwachung und Steuerung des Öffnungs- und Schließvorgangs eines elektrisch betriebenen, verschiedene mechanische Komponenten aufweisenden Aggregates vorgeschlagen, wobei dasselbe mit einem elektrischen Stellmotor versehen ist, der über Bedienelemente und eine Sensoreinrichtung beeinflußbar ist, die mit einer aus Meßwerten resultierende Signale unter Sicherheitsaspekten verarbeitenden Steuerelektronik verbunden sind, an der eine Leistungshalbleiter-Schaltstufe angeschlossen ist.
Um eine Minimierung der auf ein eingeklemmtes Objekt ausgeübten Kräfte zu erreichen, wird die Leistung des Stellmotors über die Leitungshalbleiter-Schaltstufe derart beeinflußt, daß die Verstellgeschwindigkeit des Stellorgans über dessen Verstellweg in Abhängigkeit von jeweils vorgegebenen Positionen des Aggregates einstellbar ist.

## Beschreibung

Die vorliegende Erfindung geht von einem entsprechend dem Oberbegriff des Hauptanspruches konzipierten Verfahren aus.

Solche Verfahren sind insbesondere dafür vorgesehen, um beim Schließvorgang des in einem Kraftfahrzeug vorhandenen, elektrisch betriebenen Aggregates eine übermäßige Gefährdung von im Bereich dieses Aggregates befindlichen Personen durch das Einklemmen von Körperteilen zu vermeiden.

Durch die DE 31 36 746 C2 ist ein derartiges Verfahren bekanntgeworden, wobei eine dem Aggregat zugeordnete Steuerelektronik einerseits über Bedienelemente und andererseits über eine Sensoreinrichtung beeinflußbar ist. Dabei werden laufend von der Sensoreinrichtung, u.a. von der Drehzahl oder der Öffnungs- bzw. Schließgeschwindigkeit des verstellbaren Aggregatteiles bzw. des zugehörigen Stellmotors abhängige Meßwerte der Steuerelektronik übermittelt, die einer bereichsbezogenen Bewertung unterzogen werden.

Im einzelnen bedeutet dies, daß in einem ersten Bereich, der von einem völlig geöffneten bis zu einem etwa halb geöffneten Zustand des Aggregates geht, keine Überwachung stattfindet. In einem zweiten Bereich, der von dem etwa halb geöffneten bis zu einem fast vollständig geschlossenem Zustand des Aggregates geht, wird dann die auf die vorerwähnten Sicherheitsaspekte ausgerichtete Überwachung durchgeführt. Dieser Bereich könnte natürlich ohne Mehraufwand um den ersten Bereich erweitert werden und zwar wenn auch für den ersten Bereich die Sicherheit verlangt wird.
In einem dritten (recht kleinen) Bereich, der von dem fast vollständig geschlossenen bis zu dem vollständig geschlossenen Zustand des Aggregates geht und dem Einlauf des zu verstellenden Aggregateteiles in die dort vorgesehene Dichtungsanordnung zugeordnet ist, wird wiederum keine Überwachung vorgenommen, und zwar weil in diesem Bereich keine Gefährdung von Körperteilen mehr auftreten kann. Bei einem derart konzipierten Aggregat besteht das Problem, daß der Stellmotor bzgl. seiner Leistung so ausgelegt sein muß, daß die über den gesamten Verstellbereich sich ergebenden, z.B. durch konstruktive Gestaltung des Aggregates oder durch äußere Einflüsse bedingten mechanischen Widerstände überwindbar sind. In der Konsequenz bedeutet dies, daß der Stellmotor leistungsmäßig deutlich größer ausgelegt sein muß, als es für den über den weitaus größten Teil des Verstellweges erforderlichen Bedarf notwendig ist. Dadurch besteht dann aber wieder die Problematik, daß von dem zu verstellenden Aggregateteil ein Körperteil mit einer unverhältnismäßig hohen Kraft/Weg-Rate eingeklemmt werden kann.

Außerdem ist durch die DE 37 28 008 A1 eine Betätigungseinrichtung für zum Schließen und Freigeben von Öffnungen vorgesehene bewegbare Teile bekanntgeworden, wobei die Drehzahl des Stellmotors und damit die Geschwindigkeit des bewegbaren Teils veränderbar ist.
Ein Hinweis auf eine positionsbezogene Beeinflussung der Drehzahl zwecks Begrenzung der im Einklemmfall ausgeübten Kraft ist daraus jedoch nicht ableitbar.

Vielmehr wird im Gegenteil darauf hingewiesen, das Drehmoment, d.h. die Kraft auch bei reduzierter Drehzahl beizubehalten.

Weiterhin ist durch die DE 37 36 400 A1 ein den vorstehenden Gegebenheiten im wesentlichen entsprechendes Verfahren bekanntgeworden, wobei zusätzlich beim Übergang vom ersten bzw. dritten Bereich zum zweiten - den Sicherheitsaspekten Rechnung tragenden - Bereich die Geschwindigkeit und damit die im Einklemmfall auf ein Objekt ausgeübte Kraft gegenüber den im ersten bzw. dritten Bereich herrschenden Verhältnisse reduziert wird.
Bei dieser bekannten Ausführungsform besteht aber das Problem, daß die Geschwindigkeit im sicherheitsrelevanten zweiten Bereich nicht mehr verändert wird, so daß eine feinfühlige Abstimmung der gegebenenfalls zur Ausübung gelangenen Kräfte nicht realisierbar ist.

Schließlich gehört gemäß der Deutschen Patentanmeldung 195 07 137.9 ein Verfahren zum Stand der Technik, bei dem zur Erzielung einer feinfühligen Abstimmung der gegebenenfalls im sicherheitsrelevanten zweiten Bereich ausgeübten Kräfte die Geschwindigkeit in diesem Bereich reduziert wird. Bei diesem Verfahren werden die gegebenenfalls im zweiten Bereich ausgeübten Kräfte jedoch nicht zwangsläufig auf den durch die tieftsmögliche Geschwindigkeit bedingten untersten Wert begrenzt.

Der vorliegenden Erfindung liegt deshalb die Aufgabe zugrunde, das im Oberbegriff des Hauptanspruches vorausgesetzte Verfahren derart weiterzubilden, daß die von dem zu verstellenden Aggregateteil im Einklemmfall ausgeübte Kraft über kritische Bereiche des Verstellweges auf ein Minimum begrenzbar ist.

Erfindungsgemäß wird die Aufgabe durch die im kennzeichnenden Teil des Hauptanspruches angegebenen Maßnahmen gelöst. Vorteilhaft bei einer solchen Vorgehensweise ist, daß der gesamte Verstellbereich sehr feinfühlig hinsichtlich der Verstellgeschwindigkeit und damit bezüglich der auf eingeklemmte Objekte ausgeübten Kraft optimiert werden kann.

Besonders günstige Weiterbildungen des erfindungsgemäßen Verfahrens sind in den Unteransprüchen angegeben und werden anhand einer schematischen Darstellung eines elektrisch betriebenen, als Fensterhebesystem ausgebildeten Aggregates näher erläutert.

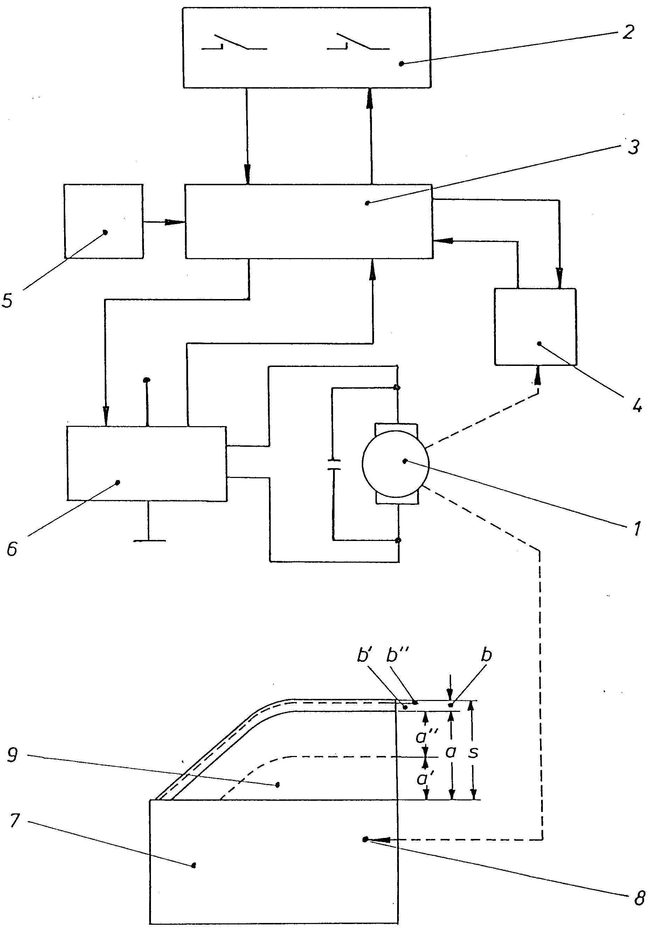

Wie aus der Zeichnung hervorgeht, wird das elektrisch betriebene Aggregat von einem in einer Kraftfahrzeugtür 7 angeordneten Fensterhebesystem repräsentiert, welches mit einem elektrischen Stellmotor 1 versehen ist, der über ein nur angedeutetes Stellorgan 8 das zu verstellende Aggregateteil 9 (Fensterscheibe) bewegt und damit das von dem zu verstellenden Aggregateteil und einem feststehenden Aggregateteil (Fensterrahmen) gebildete Aggregat (Fenster) öffnet oder schließt. Der elektrische Stellmotor 1 ist dabei über eine Leistungshalbleiter-Schaltstufe 6 an der Spannungsversorgung (Bordnetz) angeschlossen, die mit einer von einem Taktgeber 5 beeinflußten Steuerelektronik 3 verbunden ist, der einerseits Bedienelemente 2 und andrerseits eine Sensoreinrichtung 4 zugeordnet sind. Somit kann die Steuerelektronik 3 und damit der Stellmotor 1 über die Bedienelemente 2 unmittelbar und über die Sensoreinrichtung 4 mittelbar durch ursächlich mit dem Fensterhebesystem zusammenhängende Verstellparameter beeinflußt werden.

Der gesamte Verstellweg s der Fensterscheibe 9 ist in zwei Verstell-Bereiche a,b unterteilt, wovon der eine Bereich a, der von dem vollständig geöffneten bis zu einem überwiegend geschlossenen Zustand des Fensters geht, als sogenannter erster Sicherheitsbereich anzusehen ist. In diesem Verstell-Bereich a wird ausgehend von einem sogenannten ersten ggf. fortlaufend nachgebesserten Meßwert durch kontinuierliche Prüfung untersucht, ob ein aus diesem Meßwert gebildeter, statische und dynamische Größen berücksichtigender Grenzwert von nachfolgend ermittelten Meßwerten überschritten wird. Sollte dies der Fall sein, so wird über die vorzugsweise aus einem Mikrocomputer bestehende Steuerelektronik 3 eine sogenannte Gefahrenöffnung des Fensters eingeleitet, d.h. der elektrische Stellmotor 1 wird abgeschaltet und anschließend gegensinnig betrieben, so daß das Fenster wieder geöffnet wird, wobei der Öffnungsweg dann frei gewählt werden kann.

Der Bereich a kann dabei in zwei Abschnitte a',a'' unterteilt werden, wobei in einem vom vollständig geöffneten bis zum etwa halbgeöffneten Zustand des Fensters gehenden Abschnitt a' keine Sicherheit für den Einklemmfall in vorstehend erwähntem Sinn vorhanden ist und zwar weil in diesem Abschnitt das Einklemmen von Körperteilen mit mehr oder minder großer Wahrscheinlichkeit ausgeschlossen werden kann.

In dem Abschnitt a'' wird dagegen wie vorerwähnt verfahren, daß heißt im Einklemmfall erfolgt dabei eine Abschaltung des Stellmotors und gegebenenfalls die vorerwähnte sogenannte Gefahrenöffnung des Fensters.

Beim Übergang vom Bereich a zum Bereich b wird die Leistung des Stellmotors 1 durch Vorgabe einer errechneten, vorzugsweise mittels Pulsweitenmodulation der Versorgungsspannung erzeugten Spannung soweit abgesenkt, daß dadurch sich die Verstellgeschwindigkeit auf den tiefstmöglichen, d.h. einen Motorstillstand gerade noch nicht zulassenden Wert reduziert. Aufgrund dessen wird die im System vorhandene Bewegungsenergie verringert, so daß das System bei ansonsten unveränderter Sensorik und gegebenen mechanischen Parametern auf eventuelle Einklemmkörper mit minimierten Kräften reagiert.

Sollte die Versorgungsspannung - z.B. durch gleichzeitigen Betrieb mehrerer Verbraucher - unter einen definierten Wert absinken, so wird die am Stellmotor 1 anliegende Spannung auf den Wert der Versorgungsspannung eingestellt. Dadurch ist gewährleistet, daß über den gesamten sicherheitsrelevanten zweiten Bereich nur eine minimierte Kraft auf ein gegebenenfalls eingeklemmtes Objekt ausgeübt wird.

Natürlich kann auch dieser Bereich b wieder in zwei Abschnitte b',b'' unterteilt werden, wobei in dem Abschnitt b' - in dem ein Einklemmen von z.B. Fingern noch möglich ist - die Sicherheit gewährleistet ist, während in dem Bereich b'', der dem Einlauf der Fensterscheibe in die damit kooperierende Dichtungsanordnung zugeordnet ist, diese aufgrund fehlender Relevanz nicht vorhanden ist. In diesem Bereich kann ein Einklemmen von Fingern oder anderen Körperteilen nicht mehr auftreten. Es muß aber dafür gesorgt werden, daß das Fenster vollkommen geschlossen wird, womit aufgrund der beteiligten Dichtmittel ein höherer Kraftaufwand verbunden ist, der den vorerwähnten Sicherheitskriterien entgegen steht.

Um dabei in diesem Bereich die Fensterscheibe bei unter den vorstehend erwähnten definierten Wert abgesunkener Versorgungsspannung gegen den erhöhten Widerstand der Dichtungsanordnung bis zum Endanschlag zu bringen, wird eine Spannungsnachführung in der Art durchgeführt, daß die Geschwindigkeit möglichst gleichbleibend aufrechterhalten wird.

## Patentansprüche

1. Verfahren zur Überwachung und Steuerung des Öffnungs- und Schließvorgangs von in Kraftfahrzeugen vorhandenen elektrisch betriebenen Aggregaten, insbesondere von Fensterhebern und/oder Schiebedächern, wobei ein an die elektrische Spannungsversorgung angeschlossener, mit einem Stellorgan des Aggregates verbundener elektrischer Stellmotor unmittelbar über Bedienelemente und mittelbar über eine die ursächlich mit dem Aggregat zusammenhängenden Verstellparameter erfassende Sensoreinrichtung unter Zwischenschaltung einer Steuerelektronik beeinflußbar ist, wobei die Leistung des Stellmotors über eine Schaltstufe in Abhängigkeit von bestimmten Positionen des Aggregates zur Realisierung von jeweils darauf sich beziehenden unterschiedlichen Verstellgeschwindigkeiten des Stellorganes über dessen Verstellweg durch Änderung von zumindest einer der beiden die Leistung bestimmenden elektrischen Größen "Strom; Spannung" so veränderbar ist, daß darüber die im Verstellweg wirksame - ggf. auf ein eingeklemmtes Objekt zur Ausübung gelangende - Kraft entsprechend einstellbar ist, wobei der Verstellweg in zumindest zwei einerseits von einem zumindest teilweise geöffneten bis zu einem überwiegend geschlossenen und andererseits von dem überwiegend geschlossenen bis zu einem zumindest nahezu vollkommen geschlossenen Zustand des Aggregates gehende Bereiche unterteilt wird, wobei die Verstellgeschwindigkeit beim Übergang von dem einen zu dem anderen Bereich veränderbar ist und wobei in beiden Bereichen des Verstellwegs eine Begrenzung der im Einklemmfall ausgeübten Kraft vorgenommen wird, **dadurch gekennzeichnet**, daß in dem von dem überwiegend geschlossenen bis zu dem zumindest nahezu vollkommen geschlossenen Zustand des Aggregates gehenden Bereich bzw. Abschnitt (b') des Verstellwegs (s) die Geschwindigkeit durch Vorgabe von zumindest einer errechneten, die Leistung bestimmenden elektrischen Größe "Strom und/oder Spannung" soweit abgesenkt wird, daß die im Einklemmfall ausgeübte Kraft - unter Vermeidung eines Motorstillstandes - auf ein Minimum begrenzt wird.

2. Verfahren nach Anspruch 1, dadurch gekennzeichnet, daß von den beiden jeweils eingestellten, die Leistung des Stellmotors (1) bestimmenden elektrischen Größen zumindest eine über den zwischen zwei bestimmten Positionen liegenden Bereich bzw. Abschnitt (b') des Verstellwegs (s) über die Schaltstufe (6) nicht verändert wird.

3. Verfahren nach einen der Ansprüche 1 oder 2, dadurch gekennzeichnet, daß von den beiden die Leistung des Stellmotors (1) bestimmenden elektrischen Größen allein die Spannung in Abhängigkeit von bestimmten Positionen des Aggregates über die Schaltstufe (6) verändert wird und daß die jeweils eingestellte Spannung in dem zwischen zwei bestimmten Positionen liegenden Bereich bzw. Abschnitt (b') des Verstellwegs (s) unabhängig von der Versorgungsspannung unverändert beibehalten wird.

4. Verfahren nach einem der Ansprüche 1 bis 3, dadurch gekennzeichnet, daß die die Leistung des Stellmotors (1) bestimmende Spannung bei einem Abfall der Versorgungsspannung unter einen definierten Wert auf den vorhandenen Wert der Versorgungsspannung eingestellt wird.

5. Verfahren nach einem der Ansprüche 1 bis 4, dadurch gekennzeichnet, daß in dem von dem nahezu vollkommen geschlossenen Zustand bis zu dem vollkommen geschlossenen Zustand gehenden Abschnitt (b'') die Geschwindigkeit des Stellmotors (1) möglichst beibehalten wird.

6. Verfahren nach Anspruch 5, dadurch gekennzeichnet, daß die Geschwindigkeit durch Nachführung der die Leistung des Stellmotors (1) bestimmenden Spannung möglichst gleichbleibend aufrechterhalten wird.
